# EUROPEAN PATENT APPLICATION

(11) **EP 4 819 300 A1**
(43) Date of publication of application: **07.10.2026**
(21) Application number: 26170396.1
(22) Date of filing: 02.04.2026
(51) Int. Cl.: H01M 10/613, H01M 10/625, H01M 10/653, H01M 10/6554, H01M 10/658, H01M 50/124, H01M 50/131, H01M 50/474, H01M 50/48

(54) **RECHARGEABLE BATTERY AND BATTERY PACK INCLUDING THE SAME**

(30) Priority: 04.04.2025 KR 20250044066
(71) Applicant: SAMSUNG SDI CO., LTD., Yongin-si, Gyeonggi-do 17084 (KR)
(72) Inventor: SEONG, Yeon Kyeong, 16678 Suwon-si, Gyeonggi-do (KR); KIM, Hyun, 16678 Suwon-si, Gyeonggi-do (KR)
(74) Representative: Gulde & Partner

(57) **Abstract**

A battery and a battery pack including the same are disclosed. A battery of a battery pack having a cooling member includes an electrode assembly and a case in which the electrode assembly is accommodated, and a thermal contact resistance between the case and the electrode assembly in a first portion of the battery adjacent to the cooling member is greater than a thermal contact resistance between the case and the electrode assembly in a second portion of the battery that is farther from the cooling member than the first portion.

## Description

### BACKGROUND

### 1. Field

Aspects of embodiments of the present disclosure relate to a battery and a battery pack including the same.

### 2. Description of the Related Art

Rechargeable batteries are batteries that can be charged and discharged, unlike primary batteries that cannot be recharged. Low-capacity rechargeable batteries (herein, "batteries") may be used in portable small electronic devices, such as smartphones, feature phones, laptop computers, digital cameras, and camcorders, whereas high-capacity rechargeable batteries are widely used as power sources for motor driving in hybrid vehicles, electric vehicles, and the like, and batteries for power storage, or the like. These batteries include electrodes including a positive electrode and/or a negative electrode, an electrode assembly including the electrodes, a case accommodating the electrode assembly, an electrode terminal connected to the electrode assembly, and the like.

As technology advances, high-capacity batteries are desired. Accordingly, a plurality of batteries may be used by being electrically connected. For example, the batteries can be applied to electronic devices in the form of a battery module including a plurality of batteries and/or a battery pack including a plurality of battery modules. A battery pack may be configured to include plurality of batteries. In this case, the electronic devices are electronic devices requiring high output and/or high capacity and include, for example, electric vehicles and the like.

The battery generates heat during charging and discharging, and since the batteries constituting the battery pack are generally disposed in close contact, if the temperature of a specific battery cell increases, the temperature of all the batteries constituting the battery pack increases, thereby degrading the performance of the battery pack. Accordingly, the battery pack may be provided with a cooling member for cooling the battery, and, for example, a water-cooled cooling member may be disposed at the bottom of the battery pack. The water-cooled cooling member may lower the temperature of the battery by operating if the battery in the battery pack rises above a certain temperature.

However, the upper portion of the battery may have a higher temperature than the lower portion due to the influence of other parts due to a structure thereof. In addition, the cooling member installed at the bottom of the battery pack may cool the battery by contacting only the lower portion of the battery, particularly the lower surface of a case. In general, the upper portion of the battery may be cooled by heat conduction by the case and/or air circulation inside the battery pack, but the cooling efficiency may be lower than that of the lower portion of the battery. As a result, even if the temperature of the battery is reduced by using the cooling member installed at the bottom of the battery pack, the electrode assembly provided inside the battery is likely to have a higher temperature at the upper portion than the lower portion. If there is a temperature difference between the upper and lower portions in the electrode assembly, the performance of the electrode assembly may be degraded and the life of the electrode assembly may also be reduced.

### SUMMARY

The invention is defined by the appended claims. The description that follows is subject to this limitation. Any disclosure lying outside the scope of said claims is only intended for illustrative as well as comparative purposes.

According to an aspect of embodiments of the present invention, a battery capable of preventing (preventing or substantially preventing) performance degradation and shortened life due to a temperature difference in an electrode assembly, and a battery pack including the same, are provided. According to another aspect of embodiments of the present invention, a battery having a reduced temperature difference according to a location and a battery pack including the same are provided.

However, aspects and technical problems to be solved by the present disclosure are not limited to the aspects and problems to be solved described above, and other aspects and problems to be solved that are not described may be clearly understood by those skilled in the art from the description of the invention described below.

According to one or more embodiments of the present invention, a battery of a battery pack having a cooling member includes an electrode assembly, and a case in which the electrode assembly is accommodated, wherein a thermal contact resistance between the case and the electrode assembly in a first portion of the battery adjacent to the cooling member is greater than a thermal contact resistance between the case and the electrode assembly in a second portion of the battery that is farther from the cooling member than the first portion.

According to one or more embodiments, a first material layer having a lower thermal conductivity than air or an electrolyte may be between the case and the electrode assembly in the first portion, and the case and the electrode assembly may be adjacent each other in the second portion.

According to one or more embodiments, a second material layer may be between the case and the electrode assembly in the first portion, and a third material layer having a greater thermal conductivity than the second material layer may be between the case and the electrode assembly in the second portion. In one or more embodiments, each of the second material layer and the third material layer may include an insulating film coated on an inner surface of the case, or an insulating film attached to the inner surface of the case or an outermost surface of the electrode assembly.

According to one or more embodiments, a fourth material layer made of an insulating material may be between the case and the electrode assembly, and a thickness of the fourth material layer in the first portion may be greater than a thickness of the fourth material layer in the second portion. In one or more embodiments, the fourth material layer may include an insulating film attached to an inner surface of the case or an outermost surface of the electrode assembly.

According to one or more embodiments, the case and the electrode assembly may be adjacent each other in the first portion, and a fifth material layer having a higher thermal conductivity than air may be between the case and the electrode assembly in the second portion. In one or more embodiments, the fifth material layer may include thermal grease.

According to one or more embodiments, a thickness of the case in the first portion may be smaller than a thickness of the case in the second portion. In one or more embodiments, an outer surface of the case may have a straight profile, and an inner surface of the case may be bent outward in the first portion such that a gap is defined between the case and the electrode assembly.

According to one or more embodiments, a battery pack includes a cooling member and a plurality of batteries on the cooling member, wherein each of the batteries includes an electrode assembly and a case in which the electrode assembly is accommodated, and a thermal contact resistance between a first portion of the case and the electrode assembly is greater than a thermal contact resistance between a second portion of the case and the electrode assembly.

### BRIEF DESCRIPTION OF THE DRAWINGS

The following drawings included with the present specification illustrate some embodiments of the present invention and further describe aspects and features of the present invention together with the detailed description of the present invention. However, the present invention is not to be construed as being limited to the drawings, in which:
FIG. 1 is a perspective view schematically showing a configuration of a battery pack according to an embodiment of the present disclosure;
FIG. 2 is a cross-sectional view schematically showing a configuration of a prismatic battery according to an embodiment of the present disclosure;
FIG. 3 is a cross-sectional view schematically showing a configuration of a cylindrical battery according to an embodiment of the present disclosure;
FIG. 4 is a cross-sectional view schematically showing a configuration of a battery cell according to an embodiment of the present disclosure;
FIG. 5 is a simulation result graph showing a heat conduction effect in each of a first portion and a second portion when the battery cell of FIG. 4 is used;
FIG. 6 is a cross-sectional view schematically showing a configuration of a battery cell according to another embodiment of the present disclosure;
FIG. 7 is a cross-sectional view schematically showing a configuration of a battery cell according to another embodiment of the present disclosure;
FIG. 8 is a cross-sectional view schematically showing a configuration of a battery cell according to another embodiment of the present disclosure; and
FIG. 9 is a cross-sectional view schematically showing a configuration of a battery cell according to another embodiment of the present disclosure.

### DETAILED DESCRIPTION

To facilitate understanding of the invention, the accompanying drawings may not be drawn to scale, and the dimensions of some components may be exaggerated. In addition, the same reference numbers may be assigned to the same components in different embodiments.

The statement that two objects for comparison are "the same" or "equal" means the same or substantially the same. Therefore, "the same," "equal," or "substantially the same" may include deviations that are considered low in the art, for example, deviations of less than 5%. Additionally, uniformity of a parameter over a given region may mean uniformity from an average perspective.

Although "first," "second," and the like may be used to describe various components, the components are not limited by these terms. These terms are used to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

Further, when it is disclosed that a certain component is "connected," "coupled," or "linked" to another component, it is to be understood that the components may be directly connected, coupled or linked to each other, or another component may be "interposed" between the components, or the components may be "connected," "coupled," or "linked" through another component. In addition, when a portion is "electrically coupled" to another part, this includes not only the case where it is "directly connected," but also the case in which the portion is "connected" with another member or element interposed therebetween.

Whenever reference is made throughout the specification to "A and/or B," this means A, B, or A and B, unless otherwise specified. That is, "and/or" includes all or any combination of the listed items. When "C to D" is described, this means C or more and D or less, unless otherwise specified.

In the present specification, "a combination thereof" may mean a mixture, a laminate, a compound, a copolymer, an alloy, a blend, and a reaction product of compositions.

The terms used in the present specification are intended to describe the embodiments of the present invention, and are not intended to limit the present invention.

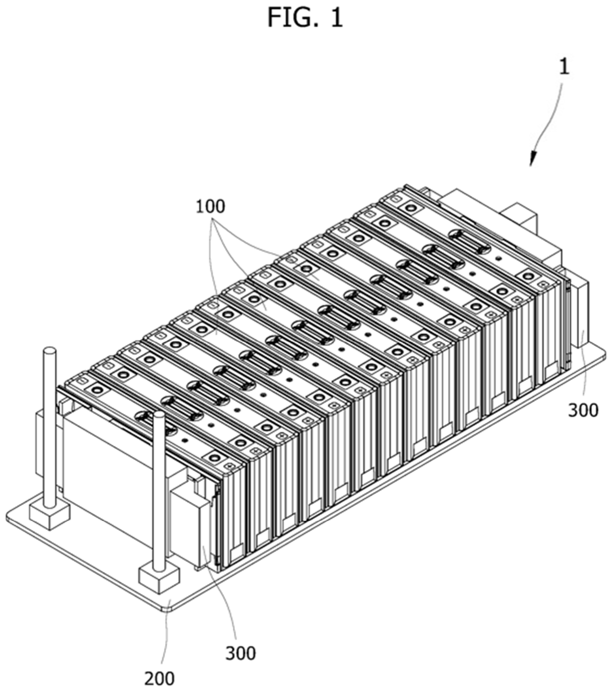

FIG. 1 is a perspective view schematically showing a configuration of a battery pack according to an embodiment of the present disclosure. Referring to FIG. 1, a battery pack 1 includes a plurality of battery cells 100 and a cooling member 200. In addition, the battery pack 1 may further include a pair of end plates 300.

The battery pack 1 shown in FIG. 1 is an example of a configuration of a battery pack to which the present embodiment may be applied, with the plurality of battery cells 100 disposed on the cooling member 200. The present embodiment may be applied to any battery pack including a plurality of battery cells 100 and a cooling member 200 for cooling the battery cells, regardless of a specific configuration thereof. For example, in the battery pack, as shown in FIG. 1, the plurality of battery cells 100 may be arranged in parallel between the pair of end plates 300 on the cooling member 200.

In an embodiment, the battery pack may have a structure in which the cooling member is disposed inside a housing having a certain (e.g., predetermined) shape, for example, a rectangular parallelepiped shape and the plurality of battery cells may be disposed inside the housing so as to be in direct or indirect contact with the cooling member. In an embodiment, the cooling member may be disposed outside the housing which accommodates the plurality of battery cells, and the entire housing may be disposed on the cooling member.

In this way, the cooling member may be disposed inside or outside the housing. The cooling member, for example, may be a water-cooled cooling member, and may have a configuration in which a coolant is supplied from the outside of the housing to circulate inside the housing and then is discharged to the outside of the housing. In an embodiment, the cooling member may be provided such that an inlet and an outlet of the coolant pass through the housing. However, the present invention is not limited thereto, and may have a configuration in which the coolant circulates only inside the housing.

The battery cell 100 may function as a unit structure which stores and supplies power in the battery pack 1. The battery pack 1 may include a plurality of battery cells 100. The plurality of battery cells 100 may be arranged in at least one direction. For example, the plurality of battery cells 100 may be stacked in a direction to form a cell stack. The battery pack 1 may include one or more cell stacks. In an embodiment, the plurality of battery cells 100 may be arranged in a zigzag pattern or in a grid shape.

According to an embodiment, the battery cell 100 may be a can-shaped battery having a case made of a hard metal material, such as aluminum, rather than a pouch-shaped battery having a pouch made of a polymer material. The can-shaped battery may transfer heat through the case, and by arranging the cooling member 200 on the outside, the battery cell 100, and the electrode assembly, accommodated inside the case, may be cooled through heat transfer through the case.

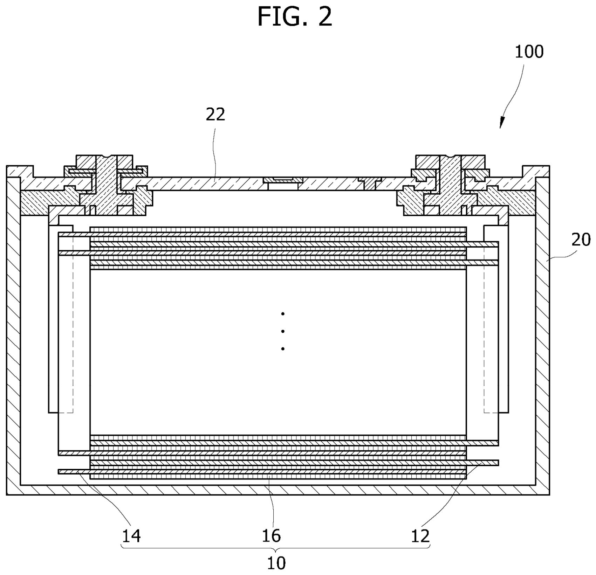

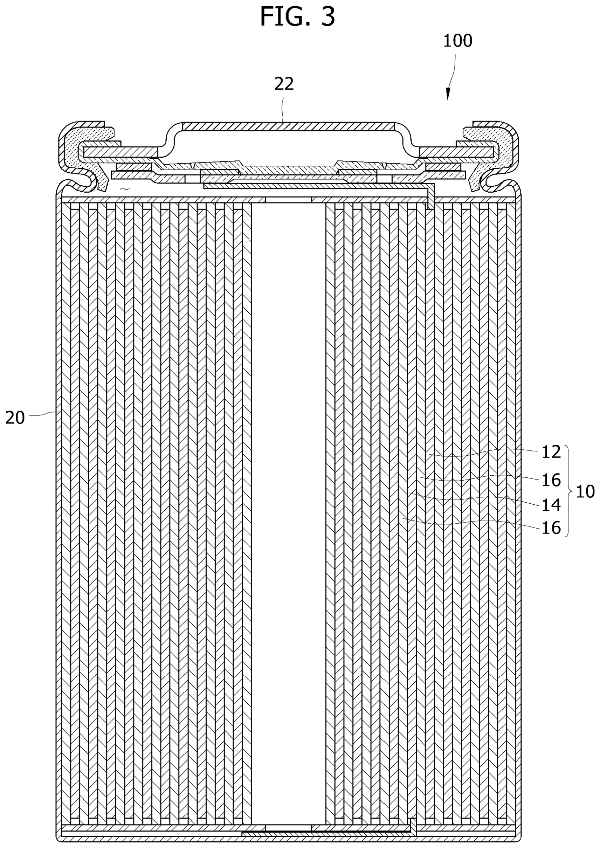

FIG. 2 is a cross-sectional view schematically showing an example of a configuration of a prismatic battery, according to an embodiment, as an example of a can-shaped battery; and FIG. 3 is a cross-sectional view schematically showing an example of a configuration of a cylindrical battery, according to an embodiment, as another example of a can-shaped battery.

Referring to FIGS. 2 and 3, the battery cell 100 may include an electrode assembly 10 with a separator 16 interposed between a positive electrode 12 and a negative electrode 14, and a case 20 in which the electrode assembly 10 is accommodated. The electrode assembly 10 including the positive electrode 12, the negative electrode 14, and the separator 16 may be impregnated with an electrolyte (not shown). In addition, the battery cell 100 may include electrode tabs (positive tab and negative tab) and electrode terminals (positive electrode terminal and negative electrode terminal) that function as electrical paths for conducting current formed in the electrode assembly 10 to the outside.

### Positive electrode

The positive electrode 12 of the electrode assembly 10 may include a current collector (substrate) and a positive electrode active material layer (positive electrode mixture layer) formed on the current collector. The positive electrode active material layer may include a positive electrode active material, and may further include a binder and/or a conductive material. As an example, the positive electrode may further include an additive that may function as a sacrificial positive electrode.

As the positive electrode active material, a compound capable of reversible intercalation and deintercalation of lithium (lithiated intercalation compound) may be used. In an embodiment, at least one of composite oxides of lithium and a metal selected from cobalt, manganese, nickel, and a combination thereof may be used.

The composite oxide may be a lithium transition metal composite oxide, and examples thereof may include lithium nickel-based oxides, lithium cobalt-based oxides, lithium manganese-based oxides, lithium iron phosphate-based compounds, cobalt-free nickel-manganese-based oxides, or a combination thereof.

For example, a compound represented as any of chemical formulas below may be used: LiaA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); Li_{aN}i_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

As an example, the positive electrode active material may be a high nickel-based positive electrode active material with a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel-based positive electrode active material can realize high capacity and thus may be applied to high capacity, high density battery cells.

In an embodiment, the content of the positive electrode active material may be 90 wt% to 99.5 wt% based on 100 wt% of the positive electrode active material layer, and the content of each of the binder and the conductive material may be 0.5 wt% to 5 wt% based on 100 wt% of the positive electrode active material layer.

The binder may attach particles constituting the positive electrode active material to each other well and also attach the positive electrode active material to the current collector well. Representative examples of the binder may include polyvinyl alcohol, carboxymethylcellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

The conductive material imparts conductivity to the electrode, and any suitable material which does not cause a chemical change and is electrically conductive may be used. Examples of the conductive material may include a carbon-based material, such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, or the like; a conductive polymer, such as a polyphenylene derivative; or a mixture thereof.

In an embodiment, aluminum (Al) may be used as the current collector (substrate), but the present disclosure is not limited thereto.

### Negative electrode

The negative electrode 14 of the electrode assembly 10 includes a current collector (substrate) and a negative electrode active material layer (negative electrode mixture layer) located on the current collector. The negative electrode active material layer may include a negative electrode active material and may further include a binder and/or a conductive material.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite, such as amorphous, plate-like, flaky, spherical, or fibrous natural graphite or artificial graphite, and examples of the amorphous carbon may include soft carbon or hard carbon, mesophase pitch carbide, calcined coke, and the like.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or Sn-based negative electrode active material may be used. The Si-based negative electrode active material may include silicon, a silicon-carbon composite, SiOₓ (0 < x ≤ 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, SnO₂, an Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled and an amorphous carbon coating layer (a shell) located on the surface of the secondary particle. In an embodiment, the amorphous carbon may be located between the silicon primary particles such that, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material. In an embodiment, for example, the negative electrode active material layer may include 90 to 99.5 wt% of the negative electrode active material, 0.5 to 5 wt% of the binder, and 0 to 5 wt% of the conductive material.

The binder may attach particles constituting the negative electrode active material to each other well, and also attach the negative electrode active material to the current collector well. The binder may include a non-aqueous binder, an aqueous binder, a dry binder, or a combination thereof.

Examples of the non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the negative electrode binder, a cellulose-based compound may be further contained to impart viscosity. This cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The conductive material imparts conductivity to the electrode, and any suitable material which does not cause a chemical change and is electrically conductive may be used. Examples may include a carbon-based material, such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, or the like; a conductive polymer, such as a polyphenylene derivative; or a mixture thereof.

In an embodiment, the negative electrode current collector (substrate) may be selected from copper foil, nickel foil, stainless steel foil, titanium foil, nickel foam, copper foam, a polymer substrate coated with a conductive metal, and a combination thereof.

### Electrolyte

The electrolyte for the battery cell 100 includes a non-aqueous organic solvent and a lithium salt.

The non-aqueous organic solvent acts as a medium through which ions involved in the electrochemical reaction of the battery can move.

The non-aqueous organic solvent may be a carbonate-based solvent, an ester-based solvent, an ether-based solvent, a ketone-based solvent, an alcohol-based solvent, an aprotic solvent, or a combination thereof.

Examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

Examples of the ester-based solvent include methyl acetate, ethyl acetate, n-propyl acetate, dimethyl acetate, methyl propionate, ethyl propionate, decanolide, mevalonolactone, and valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In an embodiment, cyclohexanone and the like may be used as the ketone-based solvent. As the alcohol-based solvent, ethyl alcohol, isopropyl alcohol, and the like may be used, and as the aprotic solvent, a nitrile such as R-CN (R is a straight, branched, or cyclic hydrocarbon group having 2 to 20 carbon atoms, and may include a double bond, an aromatic ring, or an ether group), an amide such as dimethylformamide, a dioxolane such as 1,3-dioxolane or 1,4-dioxolane, a sulfolane, and the like may be used.

The non-aqueous organic solvent may be used alone or in a mixture of two or more.

In an embodiment, if using the carbonate-based solvent, a cyclic carbonate and a chain carbonate may be mixed and used, and the cyclic carbonate and the chain carbonate may be mixed in a volume ratio of 1:1 to 1:9.

The lithium salt is a substance that is dissolved in the organic solvent and acts as a source of lithium ions within the battery, enabling the basic operation of the battery cell and promoting the movement of lithium ions between the positive electrode and the negative electrode. Representative examples of the lithium salt may include one or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (x and y are integers from 1 to 20), lithium trifluoromethanesulfonate, lithium tetrafluoroethanesulfonate, lithium difluorobis(oxalato)phosphate (LiDFOB), and lithium bis(oxalato)borate (LiBOB).

### Separator

The electrode assembly 10 includes the separator 16 interposed between the positive electrode 12 and the negative electrode 14. As the separator 16, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 16 may include a porous substrate and a coating layer containing an organic material, an inorganic material, or a combination thereof located on one surface or both, or opposite, surfaces of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in a single coating layer or may be present in the form in which a coating layer including an organic material and a coating layer including an inorganic material are stacked.

If the battery cell 100 is a prismatic battery (see FIG. 2), the electrode assembly 10 may be of a winding type or a stacked type. The winding type electrode assembly 10 may have an elliptical jelly-roll shape in which a stack of the positive electrode 12/the separator 16/the negative electrode 14/the separator 16, each in the form of a relatively long sheet, is wound multiple times in a longitudinal direction. The stacked electrode assembly 10 may have a shape in which a stack of the positive electrode 12/the separator 16/the negative electrode 14/the separator 16, each having a rectangular shape, is stacked multiple times.

In a case in which the battery cell 100 is a cylindrical battery (see FIG. 3), the electrode assembly 10 may have a circular jelly-roll shape in which a stack of the positive electrode 12/the separator 16/the negative electrode 14/the separator 16, each in the form of a relatively long sheet, is wound multiple times clockwise or counterclockwise about a winding axis in a width direction.

The case 20 may form a general appearance of the battery cell 100 and accommodate the electrode assembly 10 therein. The case 20 may be formed of a metal material having strength of a certain (e.g., predetermined) magnitude or more and excellent thermal conductivity characteristics. For example, the case 20 may be formed of a material including at least one of steel, stainless steel, aluminum, and an aluminum alloy. Accordingly, the case 20 may protect the electrode assembly 10 from an external impact and perform a heat dissipation function of dissipating heat accompanying the charging and discharging operations of the electrode assembly 10 to the outside.

In an embodiment, the case 20 of the prismatic battery cell 100 illustrated in FIG. 2 may have a rectangular parallelepiped shape as a whole. The case 20 may include a bottom portion, a front portion, a rear portion, a first side portion, and a second side portion each having a rectangular plate shape. The bottom portion may be seated on the cooling member 120 or the bottom portion of the housing. In addition, the front portion, the rear portion, the first side portion, and the second side portion may extend upward from an edge of the bottom portion (based on FIG. 2) and may be disposed to surround a space above the bottom portion. An upper side of the case 20 may be open, and a cap assembly 22 may be coupled to an upper end (or the upper side of the case 20) to be sealed.

The case 20 of the cylindrical battery cell 100 illustrated in FIG. 3 may include a cylindrical side wall portion with a central axis formed in the center, and a bottom portion that closes a lower end portion of the side wall portion. The bottom portion may be formed to have a generally disk shape and seated on the cooling member 120 or the bottom portion of the housing. An upper side of the case 20 may be open, and may be sealed by the cap assembly 22 coupled to an upper end (or the upper side of the case 20).

With reference to FIG. 1, the battery pack 1 may include the cooling member 200. The cooling member 200 may be disposed on a side of the plurality of battery cells 100 to cool the plurality of battery cells 100 that generate heat by charging/discharging operations. For example, the cooling member 200 may be disposed on a lower side of the plurality of battery cells 100 to support the plurality of battery cells 100. However, the present disclosure is not limited thereto, and the cooling member 200 may be disposed on an upper side of the plurality of battery cells 100 or on a side surface. The cooling member 200 disposed on a side of the plurality of battery cells 100 may be in direct contact with the plurality of battery cells 100, or may be in indirect contact with the plurality of battery cells 100 by a member having good thermal conductivity properties interposed therebetween.

A type or specific configuration of the cooling member 200 is not particularly limited. For example, the cooling member 200 may include a cooling plate having a flow path (not illustrated) through which a coolant may flow. The plurality of battery cells 100 may be seated on the cooling plate. In an embodiment, the cooling plate is provided with an inlet and an outlet, each connected to the flow path, such that the coolant may flow into or out of the flow path of the cooling plate.

If the battery cell 100 is a prismatic battery, the battery pack 1 may include a pair of end plates 300. Each of the pair of end plates 330 may have a flat plate shape having a certain thickness (e.g., an approximately predetermined) thickness. One of the end plates 300 may cover a front surface of the battery cell 100 at a frontmost side among the plurality of battery cells 100, and the other of the end plates 300 may cover a rear surface of the battery cell 100 at a rearmost side among the plurality of battery cells 100. By fixing the plurality of battery cells 100 in contact (e.g., close contact) with the pair of end plates 300 in opposite directions, the plurality of battery cells 100 may be fixed as a single body, and the battery cells 100 may be suppressed from expanding in a thickness direction.

Next, a structure of the battery cell 100 according to an embodiment of the present disclosure will be described in further detail.

In the configuration of the battery pack 1 in which the cooling member 200 is disposed at a side of the plurality of battery cells 100, when the cooling member 200 operates, each of the battery cells 100 is cooled starting from the portion closest to the cooling member 200. In addition, cold air may be transferred by air circulation around the battery cell 100 together with heat conduction through the case 20 or peripheral components of the battery cell 100, and, thus, other parts of the battery cell 100 may be cooled.

As a result, in the battery cell 100, a temperature difference may occur between a portion (first portion) that is in contact with or adjacent to the cooling member 200 and a portion (second portion) that is further away from the cooling member 200 than the first portion. That is, the battery cell 100 may have a temperature difference according to a location due to a difference in relative distance from the cooling member 200. In particular, in the case of the electrode assembly 10 disposed inside the case 20, the temperature difference between the first portion and the second portion may be more severe than a temperature difference of the case 20.

For example, as shown in FIG. 1, assuming the battery pack 1 in which the cooling member 200 is disposed at the bottom of the plurality of battery cells 100, in this case, if the battery cell 100 rises above a certain temperature, the cooling member 200 operates to lower the temperature of the battery cell 100. As a result, the lower portion (first portion) of the battery cell 100 is cooled first, and then cold air is transferred to the upper portion (second portion) of the battery cell 100, thereby achieving cooling.

However, due to other components installed at the upper portion of the battery pack 1, there may be a temperature difference between the lower portion and the upper portion of the battery cell 100, and, in particular, the upper portion may have a higher temperature than the lower portion. In this case, the temperature difference between the lower and upper portions of the case 20 with thermal conductivity is smaller than the temperature difference between the lower and upper portions of the electrode assembly 10 disposed therein. In particular, in the battery pack 1, considering that other components, including a bus bar, are disposed on the upper side of the plurality of battery cells 100, and the temperatures of these components are relatively higher than the temperature of the lower portion, even when the battery cell 100 is cooled by the cooling member 200, the temperature difference between the lower and upper portions of the electrode assembly 10 may be more severe than the temperature difference of the case 20.

According to an embodiment, when cooling the battery cell 100 with the cooling member 200, in the battery cell 100, considering the cooling process in which the portion (first portion) close to the cooling member 200 is cooled first, and cold air propagates along the case 20 of the battery cell 100 to a portion (second portion) far from the cooling member 200 to cool the electrode assembly 10 therein, the battery cell 100 is configured such that the heat transfer characteristics between the case 20 and the electrode assembly 10 are different according to the distance from the cooling member 200, that is, in the first and second portions.

In an embodiment, the thermal contact resistance between the case 20 and the electrode assembly 10 is less in the second portion far from the cooling member 200 than in the first portion close to the cooling member 200 in the battery cell 100. That is, the second portion allows better heat transfer than the first portion. Accordingly, since heat transfer from the electrode assembly 10 to the case 20 caused by cold air faster in the second portion than in the first portion, the second portion may be cooled relatively quickly. As a result, the temperature difference induced between the first portion and the second portion in the electrode assembly 10 may be reduced.

Here, the "thermal contact resistance" between the case 20 and the electrode assembly 10 may be defined as the product of the thermal conductivity and thickness from the case 20 including the case 20 itself to the electrode assembly 10. For example, in a case in which no film or thin film is interposed between the case 20 and the electrode assembly 10 having a gap (e.g., a predetermined gap), or the case 20 and the electrode assembly 10 are adjacent each other, the "thermal contact resistance" between the case 20 and the electrode assembly 10 may be the sum of the thermal contact resistance of the case 20 and the thermal contact resistance of the gap (i.e., air). As another example, if at least one film and/or thin film is interposed between the case 20 and the electrode assembly 10 having a gap (e.g., a predetermined gap), the "thermal contact resistance" between the case 20 and the electrode assembly 10 may be the sum of the thermal contact resistance of the case 20, the thermal contact resistance of the film or thin film, and the thermal contact resistance of the gap (i.e., air).

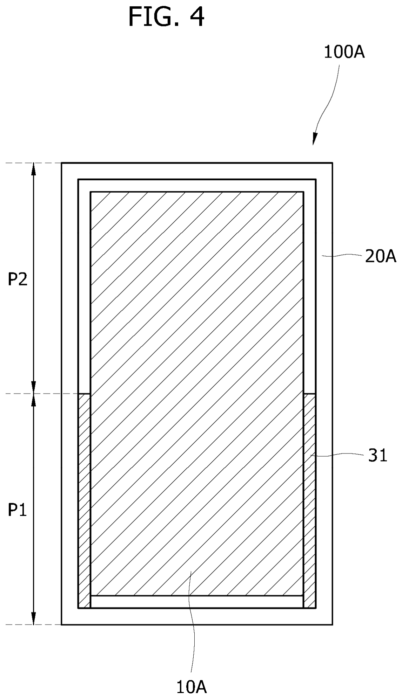

FIG. 4 is a cross-sectional view schematically showing a configuration of a battery cell according to an embodiment. The cross-sectional view of FIG. 4 may be a cross-sectional view of a prismatic battery cell taken along a plane parallel to the first and second side portions of the case, or a cross-sectional view of a cylindrical battery cell taken along a plane including the winding axis.

In addition, in FIG. 4, the cooling member (not shown) is assumed to be disposed on the lower side of the battery cell 100A. Accordingly, a lower portion of a battery cell 100A located relatively close to the cooling member may correspond to a first portion P1, and an upper portion of the battery cell 100A located relatively far from the cooling member may correspond to a second portion P2. In particular, in the battery pack, other parts formed of metal materials or the like may be present on the upper portion of the battery cell 100A.

In FIG. 4, the location of the boundary between the first portion P1 and the second portion P2 is illustrated at the midpoint of the battery cell 100A, but this is merely an example, and the location of the boundary may be located below or above the midpoint. In addition, FIG. 4 illustrates that the battery cell 100A is divided into only two portions P1 and P2, which is merely an example, and the battery cell 100A may be divided into three or more portions.

Referring to FIG. 4, the battery cell 100A includes an electrode assembly 10A and a case 20A accommodating the electrode assembly 10A. The electrode assembly 10A may be in contact with an inner surface of the case 20A or a gap of a certain size (e.g., a predetermined size) may be present between the electrode assembly 10A and the case 20A. If the electrode assembly 10A is a winding type, the outermost separator may be exposed at the outer surface, or an insulating tape may be attached to all or part of the outermost separator.

In an embodiment, between the electrode assembly 10A and the case 20A, a first material layer 31 is disposed in the first portion P1, but the first material layer 31 is not disposed in the second portion P2. Here, the first material layer 31 may be a layer of a material having relatively low thermal conductivity, and may have a lower thermal conductivity than a thermal conductivity of an electrolyte or air. As a result, the thermal contact resistance between the electrode assembly 10A and the case 20A may be greater in the first portion P1 than in the second portion P2.

In the battery cell 100A having such a configuration, the heat transfer caused by cold air from the electrode assembly 10A to the case 20A may not be as easy in the first portion P1 as in the conventional battery cell due to the first material layer 31 having a higher thermal contact resistance than a thermal contact resistance of air or an electrolyte (or having a low thermal conductivity than a thermal conductivity of air or an electrolyte). As a result, compared to the conventional battery cell, since cooling of the battery cell 100A, particularly the electrode assembly 10A, by the cooling member is performed slowly in the first portion P1 and at the same speed as the related art in the second portion P2, a temperature difference between the first portion P1 and the second portion P2 may be reduced.

As long as the first material layer 31 has a greater thermal contact resistance than a thermal contact resistance of air or an electrolyte (or has a low thermal conductivity than a thermal conductivity of air or an electrolyte), a type or material thereof is not particularly limited. In an embodiment, for example, the first material layer 31 disposed in the first portion P1 may include an insulating film, such as a ceramic or insulating polymer coated on the inner surface of the case 20A. In an embodiment, the first material layer 31 may include an insulating film attached to the inner surface of the case 20A or attached to the outermost surface of the electrode assembly 10A. The insulating film may include, for example, a mica sheet.

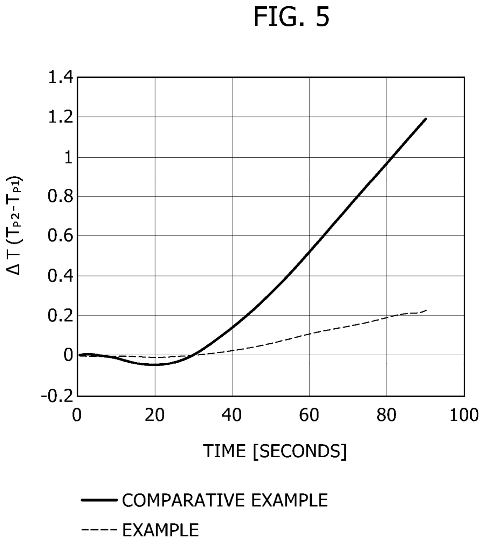

FIG. 5 is a simulation result graph showing a heat conduction effect in each of the first portion P1 and the second portion P2 when the battery cell of FIG. 4 is used. In the graph of FIG. 5, the "Example" refers to a case in which, in the battery cell 100A of FIG. 4, the first material layer 31 is formed of a material having a thermal conductivity of 0.004 W/m-K and a film having a thickness of 2 mm, and the thermal contact resistance between the case 20A and the electrode assembly 10A in the first portion P1 including the first material layer 31 is 0.5 m²·K/K. On the other hand, the thermal contact resistance between the case 20A and the electrode assembly 10A in the second portion P2 without the first material layer 31 in the "Example," as well as the thermal contact resistances between the case and the electrode assembly in both the first portion P1 and the second portion P2 in the "Comparative Example," were set to zero. In the simulation, the temperatures of the battery cells in both the "Example" and the "Comparative Example" were set to about 37°C, and the lower surface of the battery cell near the first portion P1 was cooled using cooling water of about 15°C.

Referring to FIG. 5, in the case of the Comparative Example, it can be seen that a temperature difference (e.g., a temperature difference ΔT between a temperature TP1 in the first portion P1 and a temperature TP2 in the second portion P2 referred by the vertical coordinate in FIG. 5) between the first portion P1 and the second portion P2 increases as cooling starts and time (as referred by the horizontal coordinate in FIG. 5) passes, and after about 70 seconds, the temperature difference is 1 °C or more. This is because, as time passes, the first portion P1 close to the cooling member is cooled more efficiently and quickly than the second portion P2.

On the other hand, in the case of the Example, it can be seen that the temperature difference between the first portion P1 and the second portion P2 occurs as time passes, but the degree is much smaller than that of the Comparative Example, and the temperature difference is only about 0.2 °C even after 90 seconds have passed. This is because the first material layer 31 having high thermal contact resistance is disposed in the first portion P1, which is closer to the cooling member, thereby making the cooling rates of the first portion P1 and the second portion P2 similar to each other.

Accordingly, in the battery pack including the battery cell 100A of FIG. 4, even when the lower surface of the battery cell 100A is cooled by the cooling member, the temperature difference between the lower first portion P1 and the upper second portion P2 is not significant, and, thus, the temperature difference between the upper and lower portions may be reduced compared to the conventional battery cell.

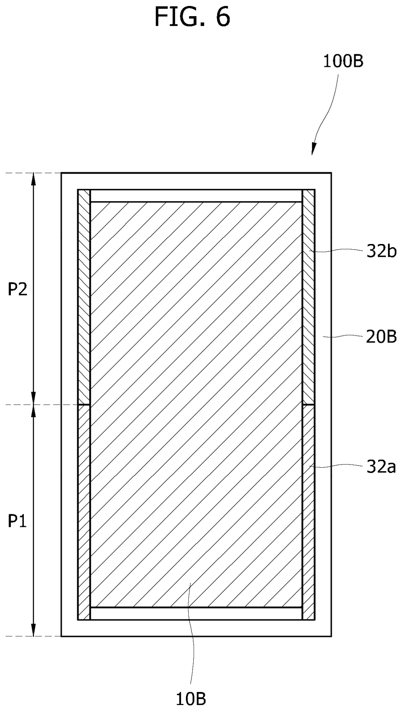

FIG. 6 is a cross-sectional view schematically showing a configuration of a battery cell according to another embodiment of the present disclosure. Herein, differences from the embodiment illustrated in FIG. 4 will be mainly described. Accordingly, matters not specifically described in the present embodiment may be applied in the same manner as those described with reference to FIG. 4.

Referring to FIG. 6, a battery cell 100B includes an electrode assembly 10B and a case 20B accommodating the electrode assembly 10B. The electrode assembly 10B may be in contact with an inner surface of the case 20B or a gap of a certain size (e.g., predetermined size) may be present between the electrode assembly 10B and the case 20B. If the electrode assembly 10B is a winding type, an outermost separator may be exposed at the outer surface, or an insulating tape may be attached to all or part of the outermost separator.

In addition, between the electrode assembly 10B and the case 20B, a second material layer 32a is disposed in the first portion P1, and a third material layer 32b formed of a material different from that of the second material layer 32a is disposed in the second portion P2. In an embodiment, the second material layer 32a has a greater thermal contact resistance than a thermal contact resistance of the third material layer 32b (or has a smaller thermal conductivity than a thermal conductivity of the third material layer 32b). In an embodiment, assuming that the thicknesses of the second material layer 32a and the third material layer 32b are the same, the thermal conductivity of the material forming the second material layer 32a is less than that of the material forming the third material layer 32b. As a result, the thermal contact resistance between the electrode assembly 10B and the case 20B may be greater in the first portion P1 than in the second portion P2. In an embodiment, for example, the second material layer 32a may include a mica sheet, and the third material layer 32b may include a silicone thermal sheet.

In the battery cell 100B having such a configuration, the heat transfer caused by cold air from the electrode assembly 10B to the case 20B may occur more easily in the second portion P2 than in the first portion P1 due to the second material layer 32a and the third material layer 32b having a lower thermal contact resistance than a thermal contact resistance of the second material layer 32a (or having a greater thermal conductivity than a thermal conductivity of the second material layer 32a). As a result, compared to the conventional battery cell, the cooling of the battery cell 100B, particularly the electrode assembly 10B, by the cooling member may occur more rapidly in the second portion P2 than in the first portion P1.

There is no particular limitation on the method of implementing the second material layer 32a and the third material layer 32b. For example, each of the second material layer 32a and the third material layer 32b may be implemented in the form of an insulating film coated on the inner surface of the case 20B. In this case, the thicknesses of the second material layer 32a and the third material layer 32b do not necessarily have to be the same, and may be different from each other. As another example, the second material layer 32a and the third material layer 32b may be implemented in the form of an insulating film attached to the inner surface of the case 20B or attached to the outermost side (or outermost surface) of the electrode assembly 10B, respectively.

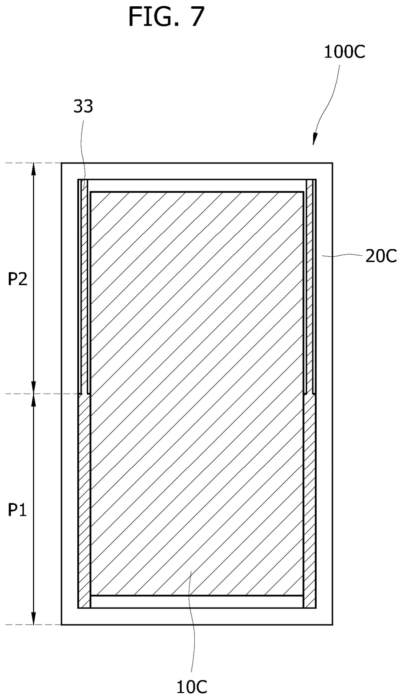

FIG. 7 is a cross-sectional view schematically showing a configuration of a battery cell according to another embodiment of the present disclosure. Herein, differences from the embodiment illustrated in FIG. 4 will be mainly described. Accordingly, matters not specifically described in the present embodiment may be applied in the same manner as those described with reference to FIG. 4.

Referring to FIG. 7, a battery cell 100C includes an electrode assembly 10C and a case 20C accommodating the electrode assembly 10C. The electrode assembly 10C may be in contact with an inner surface of the case 20C or a gap of a certain size (e.g., predetermined size) may be present between the electrode assembly 10C and the case 20C. If the electrode assembly 10C is a winding type, an outermost separator may be exposed at the outer surface, or an insulating tape may be attached to all or part of the outermost separator.

In an embodiment, between the electrode assembly 10C and the case 20C, a fourth material layer 33 is disposed in both the first portion P1 and the second portion P2, but the thicknesses of the fourth material layer 33 in the first portion P1 and the second portion P2 are different. In an embodiment, in the battery cell 100C, the fourth material layer 33 has a greater thickness in the first portion P1 than in the second portion P2. Accordingly, the fourth material layer 33 has a greater thermal contact resistance in the first portion P1 than in the second portion P2. As a result, the thermal contact resistance between the electrode assembly 10C and the case 20C may be greater in the first portion P1 than in the second portion P2. For example, the fourth material layer 33 may include a mica sheet.

In the battery cell 100C having such a configuration, the heat transfer caused by cold air from the case 20C to the electrode assembly 10C to the case 20C may occur more easily in the second portion P2 than in the first portion P1 due to the fourth material layer 33 having different thicknesses. As a result, compared to the conventional battery cell, the cooling of the battery cell 100C, particularly the electrode assembly 10C, by the cooling member may occur more rapidly in the second portion P2 than in the first portion P1.

There is no particular limitation on a method of implementing the fourth material layer 33. For example, the fourth material layer 33 may be implemented in the form of an insulating film coated on the inner surface of the case 20C, attached to the inner surface of the case 20C, or attached to the outermost surface of the electrode assembly 10C.

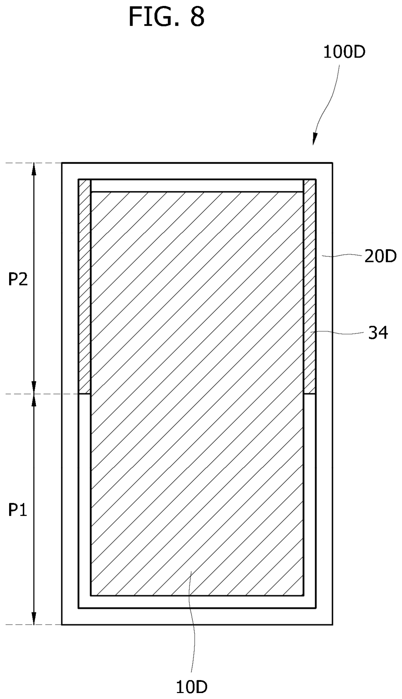

FIG. 8 is a cross-sectional view schematically showing a configuration of a battery cell according to another embodiment of the present disclosure. Herein, differences from the embodiment illustrated in FIG. 4 will be mainly described. Accordingly, matters not specifically described in the present embodiment may be applied in the same manner as those described with reference to FIG. 4.

Referring to FIG. 8, a battery cell 100D includes an electrode assembly 10D and a case 20D accommodating the electrode assembly 10C. The electrode assembly 10D may be in contact with an inner surface of the case 20D or a gap of a certain size (e.g., predetermined size) may be present between the electrode assembly 10D and the case 20D. If the electrode assembly 10D is a winding type, an outermost separator may be exposed at the outer surface, or an insulating tape may be attached to all or part of the outermost separator.

In an embodiment, between the electrode assembly 10D and the case 20D, a fifth material layer 34 is disposed in the second portion P2, and the fifth material layer 34 is not disposed in the first portion P1. Here, the fifth material layer 34 may be a layer of a material having relatively high thermal conductivity, and may have a higher thermal conductivity than a thermal conductivity of an electrolyte or air. As a result, the thermal contact resistance between the electrode assembly 10D and the case 20D may be greater in the first portion P1 than in the second portion P2.

In the battery cell 100D having such a configuration, the heat transfer caused by cold air from the case 200 to the electrode assembly 10D to the case 20D may occur more easily and rapidly in the second portion P2 than in the conventional battery cell due to the fifth material layer 34 having lower thermal contact resistance than a thermal contact resistance of an electrolyte or air (or having a higher thermal conductivity than a thermal conductivity of an electrolyte or air). As a result, compared to the conventional battery cell, since cooling of the battery cell 100D, particularly the electrode assembly 10D, by the cooling member is performed more rapidly in the second portion P2 and is performed at the same speed as in the first portion P1, a temperature difference between the first portion P1 and the second portion P2 may be reduced.

As long as the fifth material layer 34 has a higher thermal conductivity than air or an electrolyte, a type or material thereof is not particularly limited. In an embodiment, for example, the fifth material layer 34 disposed in the second portion P2 may include thermal grease coated on the inner surface of the case 20D or the outer surface of the electrode assembly 10D.

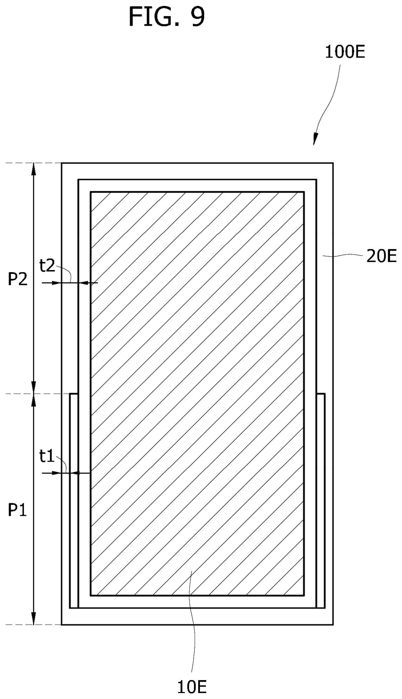

FIG. 9 is a cross-sectional view schematically showing a configuration of a battery cell according to another embodiment of the present disclosure. Herein, differences from the embodiment illustrated in FIG. 4 will be mainly described. Accordingly, matters not specifically described in the present embodiment may be applied in the same manner as those described with reference to FIG. 4.

Referring to FIG. 9, a battery cell 100E includes an electrode assembly 10E and a case 20E accommodating the electrode assembly 10E. The electrode assembly 10E may be in contact with an inner surface of the case 20E or a gap of a certain size (e.g., predetermined size) may be present between the electrode assembly 10E and the case 20E. If the electrode assembly 10E is a winding type, an outermost separator may be exposed at the outer surface, or an insulating tape may be attached to all or part of the outermost separator. In an embodiment, no additional material layer is interposed between the electrode assembly 10E and the case 20E. However, the present invention is not limited thereto, and material layers having a same thermal contact resistance may be interposed between the electrode assembly 10E and the case 20E in both the first portion P1 and the second portion P2.

According to an embodiment, the thickness of the case 20E differs in the first portion P1 and the second portion P2. In further detail, a thickness t1 of the case 20E in the first portion P1 may be smaller than a thickness t2 of the case 20E in the second portion P2 in the case 20E. Accordingly, a larger amount of heat transfer, for example, the heat transfer caused by cold air from the electrode assembly 10E to the case 20E, may be performed in the second portion P2, in which the thickness of the case 20E is thicker than that in the first portion P1. As a result, compared to the conventional battery cell, the cooling of the battery cell 100E, particularly the electrode assembly 10E, by the cooling member may be performed more rapidly in the second portion P2 than in the first portion P1, thereby reducing the temperature difference between the first portion P1 and the second portion P2.

In an embodiment, a method of making the thickness t1 of the case 20E in the first portion P1 thinner than the thickness t2 of the case 20E in the second portion P2 is to bend the inner surface of the case 20E in the first portion P1 so as to be located further outward than the inner surface of the case 20E in the second portion P2. That is, in an embodiment, the outer surface of the case 20E has a straight profile as in the conventional case, but the inner surface of the case 20E has a profile that is bent outward from the second portion P2 in the first portion P1. Accordingly, as the thickness of the case 20E becomes thinner in the first portion P1, a gap is created between the case 20E and the electrode assembly 10E. As a result, since the thermal contact resistance increases in the first portion P1, compared to the conventional battery cell, the cooling of the battery cell 100E, particularly the electrode assembly 10E, by the cooling member may be performed more rapidly in the second portion P2 than in the first portion P1, thereby reducing the temperature difference between the first portion P1 and the second portion P2.

According to one or more embodiments of the present disclosure, in a battery constituting a battery pack, a temperature difference according to a location in the electrode assembly can be minimized or reduced, thereby preventing or substantially preventing performance degradation and shortening of the life of the battery included in the battery pack.

## Claims

1. A battery of a battery pack (1) having a cooling member, the battery comprising:
an electrode assembly (10, 10A, 10B, 10C, 10D, 10E); and
a case (20, 20A, 20B, 20C, 20D, 20E) in which the electrode assembly (10, 10A, 10B, 10C, 10D, 10E) is accommodated,
wherein a thermal contact resistance between the case (20, 20A, 20B, 20C, 20D, 20E) and the electrode assembly (10, 10A, 10B, 10C, 10D, 10E) in a first portion (P1) of the battery adjacent to the cooling member (120, 200) is greater than a thermal contact resistance between the case (20, 20A, 20B, 20C, 20D, 20E) and the electrode assembly (10, 10A, 10B, 10C, 10D, 10E) in a second portion (P2) of the battery that is farther from the cooling member (120, 200) than the first portion (P1).

2. The battery as claimed in claim 1, wherein a first material layer (31) having a lower thermal conductivity than air or an electrolyte is between the case (20A) and the electrode assembly (10A) in the first portion (P1), and
the case (20A) and the electrode assembly (10A) are adjacent each other in the second portion (P2).

3. The battery as claimed in claim 1, wherein a second material layer (32a) is between the case (20B) and the electrode assembly (10B) in the first portion (P1), and a third material layer (32b) having a greater thermal conductivity than the second material layer (32a) is between the case (20B) and the electrode assembly (10B) in the second portion (P2).

4. The battery as claimed in claim 3, wherein each of the second material layer (32a) and the third material layer (32b) comprises an insulating film coated on an inner surface of the case (20B) or an insulating film attached to the inner surface of the case (20B) or an outermost surface of the electrode assembly (10B).

5. The battery as claimed in claim 1, wherein a fourth material layer (33) made of an insulating material is between the case (20C) and the electrode assembly (10C), and
a thickness of the fourth material layer (33) in the first portion (P1) is greater than a thickness of the fourth material layer (33) in the second portion (P2).

6. The battery as claimed in claim 5, wherein the fourth material layer (33) comprises an insulating film attached to an inner surface of the case (20C) or an outermost surface of the electrode assembly (10C).

7. The battery as claimed in claim 1, wherein the case (20D) and the electrode assembly (10D) are adjacent each other in the first portion (P1), and a fifth material layer (34) having a higher thermal conductivity than air is between the case (20D) and the electrode assembly (10D) in the second portion (P2).

8. The battery as claimed in claim 7, wherein the fifth material layer (34) comprises thermal grease.

9. The battery as claimed in claim 1, wherein a thickness of the case (20E) in the first portion (P1) is smaller than a thickness of the case (20) in the second portion (P2).

10. The battery as claimed in claim 9, wherein an outer surface of the case (20E) has a straight profile, and an inner surface of the case (20E) is bent outward in the first portion (P1) such that a gap is defined between the case (20E) and the electrode assembly (10E).

11. A battery pack (1) comprising:
a cooling member; and
a plurality of batteries on the cooling member,
wherein the plurality of the batteries includes the battery according to one of claims 1 to 10.
